# EUROPÄISCHE PATENTSCHRIFT

(11) **EP 0 687 965 B1**
(45) Veröffentlichungstag und Bekanntmachung des Hinweises auf die Patenterteilung: **08.09.1999**
(21) Anmeldenummer: 95108868.1
(22) Anmeldetag: 08.06.1995
(51) Int. Cl.: G05D 23/19

(54) **Gasbeheiztes Gerät**
Gas-fired apparatus
Appareil chauffé au gaz

(30) Priorität: 18.06.1994 DE 4421361
(43) Veröffentlichungstag der Anmeldung: 20.12.1995
(73) Patentinhaber: Diehl Stiftung & Co., 90478 Nürnberg (DE)
(72) Erfinder: Kalmer, Christoph Paul, D-90607 Rückersdorf (DE); Becke, Gerhard, D-91301 Forchheim (DE); Hammelsbacher, Karlheinz, D-91126 Schwabach (DE)
(74) Vertreter: Hofmann, Gerhard, Dipl.-Ing. Patentassessor

(56) Entgegenhaltungen:
- EP-A- 0 352 217
- EP-A- 0 440 872
- DE-A- 1 529 070
- DE-A- 3 815 984
- US-A- 4 461 940
- US-A- 4 663 710

## Beschreibung

Die Erfindung betrifft ein gasbeheiztes Gerät, insbesondere einen Kochapparat mit mindestens einem Glaskeramik-Kochfeld, nach dem Oberbegriff des Patentanspruches 1.

Die Erfindung eignet sich für die Anwendung bei Gasherden, Gasheizungen, Gasboilern, bevorzugt jedoch bei Glaskeramik-Kochfeldern mit Gasbeheizung.

Bei Glaskeramik-Kochfeldern ist eine Beheizung elektrisch oder mit Gas möglich. Im Falle der Gasbeheizung sind insbesondere Vorkehrungen für einen sicheren Betrieb des Kochapparates vorgeschrieben, um Unfälle durch ausströmendes Gas zu vermeiden. Der Aufbau eines Glaskeramik-Kochfeldes unter Verwendung von Gasstrahlungsbrennern, Magnetventilen, Glühzündern und Temperaturüberwachungseinrichtungen ist bekannt und insoweit nicht Gegenstand der vorliegenden Erfindung.

Aus Sicherheitsgründen muß die elektronische Steuereinrichtung für den Betrieb der Brenner, Glühzünder und Magnetventile, Temperaturüberwachung und dergleichen zwei voneinander unabhängige Sicherheitspfade aufweisen, um die ordnungsgemäße Funktion der Elektronik hinsichtlich der Steuerung der Brenner oder Magnetventile zu gewährleisten.

Durch die EP 0 352 217 B1 ist ein Verfahren zum Steuern und Überwachen eines gasbeheizten Gerätes unter Verwendung eines Mikrocomputersystemes bekannt. Das Mikrocomputersystem ist über entsprechende Steuerleitungen mit einer Sicherheitsabschalteinrichtung verbunden, die alle Endstufen von Stellgliedern und die Zündeinrichtung mit Spannung versorgt. Die Gasventilendstufe wird von dem Mikrocomputersystem über eine weitere Leitung angesteuert, wobei das Ausgangssignal der Gasventilendstufe über eine getrennte Leitung dem Mikrocomputersystem zurückgemeldet wird. Damit verfügt das offenbarte Verfahren zur Steuerung und Überwachung eines gasbeheizten Gerätes prinzipiell über zwei voneinander unabhängige Sicherheitspfade.

Es ist nun Aufgabe der Erfindung, eine einfache Lösung für die Ausbildung der beiden getrennten Sicherheitspfade vorzuschlagen.

Zur Lösung dieser Aufgabe werden die Merkmale des Anspruches 1 vorgeschlagen.

In dem ersten Sicherheitspfad wird also ein aus dem Mikroprozessor in der Steuereinrichtung ausgegebenes Signal vorgegebener Frequenz (wie z.B. 1 kHz) auf Vorhandensein und Fehlertoleranz und ein Bauelementeausfall durch eine eigensichere Schaltung überprüft.

Gemäß weiterer Ausbildung der Erfindung ist vorgesehen, daß der zweite Sicherheitspfad den bei ordnungsgemäßem Betrieb geschlossenen Schalter des Sicherheitsrelais, den Verbraucher, einen Triac zu dessen Ansteuerung sowie ein Meßorgan zur Feststellung des Stromflusses durch diesen Sicherheitspfad enthält. Anstelle eines Triac kann im Sinne der Erfindung als ansteuerbarer elektrischer Schalter grundsätzlich auch ein Relais oder ein Transistor verwendet sein.

Die Erfindung kann mit Vorteil bei mehreren Glaskeramik-Kochfeldern angewandt werden. In diesem Fall ist das Sicherheitsrelais für alle Magnetventile gemeinsam, der erste und zweite Sicherheitspfad können entweder jedem Verbraucher (Kochfeld) einzeln zugeordnet sein oder - bevorzugt - der erste Sicherheitspfad allen Verbrauchern gemeinsam, der zweite Sicherheitspfad hingegen für jeden Verbraucher gesondert vorhanden sein.

Die Erfindung ist hinsichtlich der Ausbildung des ersten Sicherheitspfades dahingehend weitergebildet, daß ein UND-Glied zur Prüfung des Vorhandenseins und ein Bandpaß zur Prüfung der Frequenztoleranz des Signals dient. UND-Glied soll in diesem Zusammenhang allgemein eine UND-Verknüpfungsfunktion bedeuten.

Hinsichtlich des zweiten Sicherheitspfades kann die Erfindung dahingehend weitergebildet werden, daß das Meßorgan ein ohmscher Widerstand (Shunt-Widerstand) ist, an dem das Vorhandensein eines Spannungsabfalls festgestellt wird.

Im folgenden soll die Erfindung anhand der Zeichnung an einem Ausführungsbeispiel noch näher erläutert werden.

Es zeigen:
- Figur 1: ein Blockschaltbild der elektronischen Steuereinrichtung mit den beiden Sicherheitspfaden;
- Figur 2: eine eigensichere Schaltung im ersten Sicherheitspfad
- Figur 3: ein Blockschaltbild der Anordnung nach Figur 1 für Anwendung bei mehreren Verbrauchern.

Das wesentliche Bauteil in der elektronischen Steuereinrichtung ist ein Mikroprozessor 1, welcher den Betrieb aller Einrichtungen im Glaskeramik-Kochfeld steuert. Sein Ausfall ist daher wichtig zu überprüfen. Ferner ist es von Wichtigkeit, die Einschaltung der Magnetventile bzw. der Gasbrenner zu kontrollieren. Liegt hier keine ordnungsgemäße Funktion vor, so muß sofort die Gaszufuhr abgeschaltet werden.

Dem Mikroprozessor 1 ist ein UND-Gatter 2 nachgeschaltet, dessen einem Eingang eine Mikroprozessor vorhandene Frequenz, im vorliegenden Fall 1 kHz anliegt. Am anderen Eingang des UND-Gatters 2 liegt ein Überspannungssignal aus einem Netzteil 3 an, welch letzteres die Stromversorgung der elektronischen Steuereinrichtung sicherstellt. Das Ausgangssignal des Netzteils 3 ist durch einen Inverter 4 negiert. An den Ausgang des UND-Gatters 2 schließt sich der erste Sicherheitspfad 5 an. Dieser enthält einen Bandpaß 6, eine Vestärkerschaltung 7, welche eigensicher ist sowie ein Sicherheitsrelais 8 mit seinem zugehörigen Schaltkontakt 9. Dieser Schaltkontakt 9 ist Teil eines Stromkreises 10, der mit dem zweiten Sicherheitspfad 11 kontrolliert wird. Teil des Stromkreises 10 ist ein Magnetventil 12 oder alternativ ein Gasbrenner, d.h. allgemein gesprochen, ein sicherheitsempfindlicher Verbraucher.

Der zweite Sicherheitspfad 11 enthält einen Triac 13 und einen Meßwiderstand 14. Der Triac dient, unter Steuerung durch den Mikroprozessor 1 zur Durchschaltung des Stromkreises 10, wenn das Magnetventil oder der Gasbrenner mit Strom versorgt, d.h. in Betrieb gesetzt werden soll. Der Meßwiderstand 14 dient dazu, festzustellen, ob im Stromkreis 10 ein Strom fließt oder nicht.

Zur Anzeige eines Störfalls ist schließlich noch eine Störanzeige 15 am Mikroprozessor 1 angeschlossen, die als Lampe oder akustischer Signalgeber oder auch als Anzeige ausgebildet sein kann.

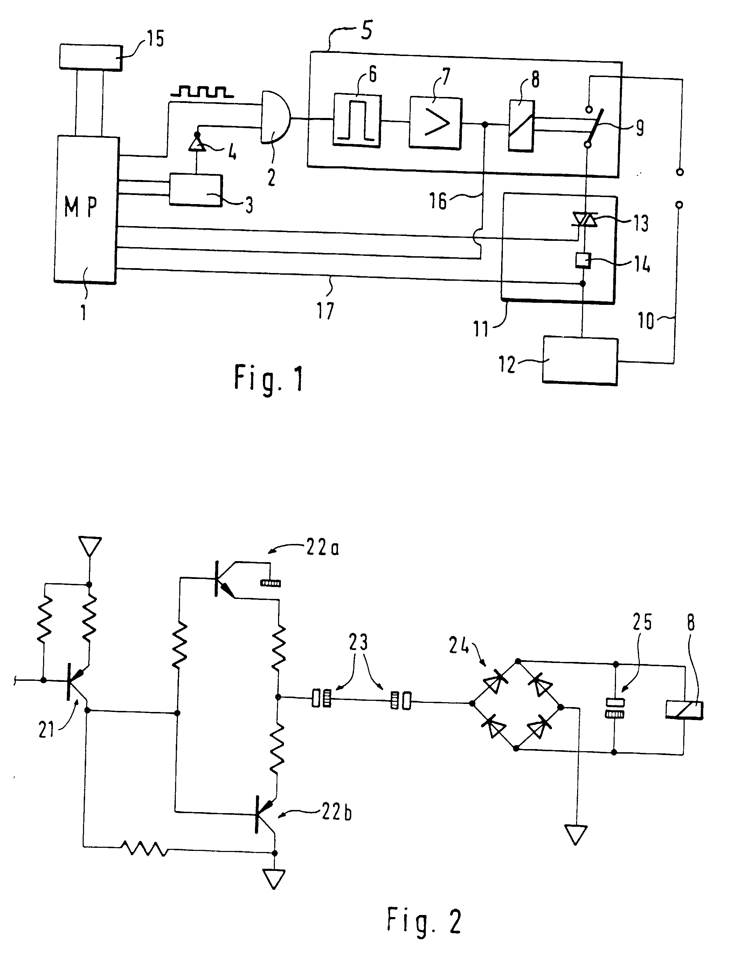

Die Funktionsweise der Steuereinrichtung nach Figur 1 ist wie folgt. Bei ordnungsgemäßem Betrieb gibt der Mikroprozessor 1 an das UND-Gatter 2 ein Rechtecksignal mit einer Frequenz von 1 kHz aus. Das Netzteil gibt im Normalbetrieb kein Überspannungssignal ab, am Ausgang des Inverters 4 wird ein Signal erzeugt, welches zusammen mit dem 1 kHz-Signal am anderen Eingang des UND-Gatters, dieses im Takt 1 kHz durchschaltet. In dem nachgeordneten Bandpaß 6, der ein handelsübliches Bauteil darstellt und deshalb an dieser Stelle nicht näher beschrieben wird, wird sowohl das Vorhandensein eines 1 kHz-Signales als auch die Einhaltung einer Fehlertoleranz von 10 % bei diesem Signal festgestellt. Ist kein Signal vorhanden oder unterscheidet sich dieses von der Frequenz von 1 kHz mit mehr als +/- 10 %, so wird am Ausgang des Bandpasses 6 kein Signal abgegeben. Der Verstärker 7 dient zur Verstärkung des 1 kHz-Signales, wobei diese Verstärkerschaltung eigensicher ist, d.h. der Ausfall eines Bauteils in dieser Schaltung wird sofort dahingehend ausgewertet, daß am Ausgang des Verstärkers 7 kein Signal abgegeben wird, auch wenn vom Bandpaß 6 ein solches Signal erzeugt wurde. Bei Vorhandensein eines Signales am Ausgang des Verstärkers 7 wird das Sicherheitsrelais 8 bestromt und der Schaltkontakt 9, der im Ruhezustand offen ist, wird geschlossen. Am Ausgang des Verstärkers 7 ist eine Leitung 16 vorgesehen, welche mit dem Mikroprozessor 1 in Verbindung steht und diesem meldet, ob am Ausgang des Verstärkers 7 ein Signal anliegt. Wie aus Figur 2 noch ersichtlich sein wird, ist das Ausgangssignal am Verstärker 7 ein Gleichspannungssignal.

Der Mikroprozessor 1 gibt, wenn er von außen den Befehl erhält, daß ein Kochfeld beheizt werden soll, einen Schaltimpuls an den Triac 13, der den Stromkreis 10 durchschaltet, um das Magnetventil 12 - oder einen Gasbrenner - zu bestromen. Bei ordnungsgemäßem Betrieb der Steuereinrichtung ist der Schaltkontakt 9 bereits vorbereitend geschlossen, so daß in diesem Fall bei Durchschaltung des Triacs 13 durch das Magnetventil Strom fließt. An dem Meßwiderstand 14 fällt eine Spannung ab, die über eine Leitung 17 an den Mikroprozessor zurückgemeldet wird, zum Nachweis dessen, daß das Magnetventil bestromt ist.

Im Fehlerfall, wenn z.B. der Mikroprozessor nicht ordnungsgemäß arbe et, ist davon auszugehen, daß das 1 kHz-Signal nicht oder nicht ordnungsgemäß anliegt. In diesem Falle wird das UND-Gatter 2 nicht durchgeschaltet, das Signal an seinem Ausgang verschwindet, es entstehen keine Signale am Ausgang des Bandpasses 6 und des Verstärkers 7, auf der Leitung 16 verschwindet somit das Signal und der Mikroprozessor erhält eine Rückmeldung. Die Verarbeitung dieses Signales muß so sein, daß der Mikroprozessor auch im Fehlerfall die Störanzeige 15 betätigen kann. Unabhängig davon ist, wegen der Nicht-Bestromung des Sicherheitsrelais 8, dessen Schaltkontakt 9 abgefallen und der Stromkreis 10 geöffnet worden. Das Magnetventil - oder der Gasbrennererhält keinen Strom mehr, der Gasfluß wird unterbrochen. Eine gleiche Funktion ergibt sich, wenn das Netzteil 3 eine Überspannung abgibt. In diesem Falle wird ein Signal ausgegeben, welches im Inverter 4 negiert wird, wodurch das Signal am Eingang des UND-Gatters 2 verschwindet.

Wenn im Bandpaß 6 oder im Verstärker 7 ein Ausfall an Bauelementen auftritt, verschwindet am Ausgang des Verstärkers 7 ebenfalls das Signal mit der Folge, daß das Sicherheitsrelais 8 nicht mehr bestromt wird und der Schaltkontakt 9 öffnet.

Ein weiterer Fehler kann sein, daß der Triac 13 durchschaltet und, weil der Schaltkontakt 9 geschlossen ist, ein Strom im Stromkreis 10 fließt, obwohl der Triac 13 kein Ansteuersignal bekommen hat. In diesem Falle stellt der Meßwiderstand 14 den Stromfluß fest, der Mikroprozessor 1 erkennt, daß im Stromkreis 10 ein Strom ohne einen entsprechenden Befehl fließt. Er schaltet in diesem Fall das 1 kHz-Signal ab und gibt gleichzeitig ein Signal an die Störanzeige.

Die Überprüfung des Ausfalles des Mikroprozessors 1 ist auch aus dem Grunde wichtig, weil von ihm auch die Steuerung eines, in der Zeichnung nicht dargestellten, Lüfterrades erfolgt, welches im Kochapparat zur Kühlung und Sauerstoffzufuhr zu den Brennern dient. Auch wenn dieses Lüfterrad nicht ordnungsgemäß dreht, sei es weil der Mikroprozessor fehlerhaft ist oder weil dessen Drehzahl aufgrund anderer Störeinflüsse nicht die erforderlichen Werte hat, so wird vom Mikroprozessor jeweils das 1 kHz-Signal abgeschaltet und die Störanzeige 15 eingeschaltet.

In Figur 2 ist eine mögliche Ausführung der Verstärkerschaltung 7 dargestellt. Über einen Eingangstransistor 21 wird das ankommende Rechtecksignal über Gegentaktverstärker 22a und 22b verstärkt und über Siebkondensatoren 23 an eine Gleichrichterbrücke 24 gegeben. Letzterer nachgeschaltet sind ein Glättungskondensator 25 sowie das bereits beschriebene Sicherheitsrelais 8. Verschwindet das Signal am Transistor 21, so verschwindet auch die Spannung am Ausgang der Gleichrichterbrücke 24 und damit am Sicherheitsrelais 8. Bei Ausfall eines der Bauelemente dieser Schaltung gemäß Figur 2 verschwindet jeweils die Spannung am Ausgang der Gleichrichterbrücke 24 mit der soeben beschriebenen Folge für das Sicherheitsrelais 8.

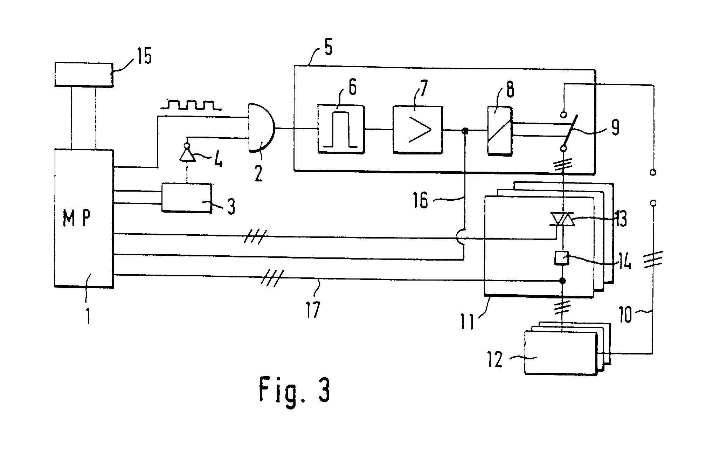

In Figur 3 ist in einem Blockschaltbild die Möglichkeit dargestellt, mehrere, nämlich in diesem Falle 3, Glaskeramik-Kochfelder 12 anzusteuern. Der Sicherheitspfad 5 ist einmal vorhanden, der Sicherheitspfad 11 hingegen dreifach. Die entsprechenden, ebenfalls mehrfach vorhandenen Leitungen sind durch eine entsprechende Zahl von Querstrichen gekennzeichnet. Die Arbeitsweise der Schaltungsanordnung entspricht im Grundsatz der von Figur 1.

## Patentansprüche

1. Gasbeheiztes Gerät, insbesondere Kochapparat mit mindestens einem Glaskeramik-Kochfeld, mit einem Gasstrahlungsbrenner in einer Gasversorgungseinrichtung und mit einer elektronischen Steuereinrichtung für den Betrieb des Gerätes, die zwei voneinander unabhängige Sicherheitspfade für die Überwachung sicherheitsempfindlicher Verbraucher aufweist, wobei unter Verwendung digitaler Signale der eine Sicherheitspfad (5) die elektronische Ansteuerung für jeden Verbraucher (12) und der andere Sicherheitspfad (11) den Stromfluß durch diesen Verbraucher (12) überwacht,
dadurch gekennzeichnet, daß das Gerät ein Sicherheitsrelais und ein von diesen überwachtes Magnetventil in der Gasversorgungseinrichtung aufweist und
daß in dem ersten Sicherheitspfad (5) ein aus einem Mikroprozessor (1) in der Steuereinrichtung ausgegebenes Signal vorgegebener Frequenz auf Vorhandensein und Frequenztoleranz und ein Bauelementeausfall durch eine eigensichere Schaltung (7) überprüft wird.

2. Gasbeheiztes Gerät nach Anspruch 1,
dadurch gekennzeichnet,
daß der zweite Sicherheitspfad (11) den bei ordnungsgemäßem Betrieb geschlossenen Schalter (9) des Sicherheitsrelais (8), den Verbraucher (12), einen Triac (13) zu dessen Ansteuerung sowie ein Meßorgan (14) zur Feststellung des Stromflusses durch diesen Sicherheitspfad enthält.

3. Gasbeheiztes Gerät nach Anspruch 1 oder 2,
dadurch gekennzeichnet,
daß der erste Sicherheitspfad (5) für alle Verbraucher (12) gemeinsam, hingegen der zweite Sicherheitspfad (11) für jeden Verbraucher (12) gesondert vorhanden ist.

4. Gasbeheiztes Gerät nach Anspruch 1,
dadurch gekennzeichnet,
daß ein UND-Glied (2) zur Prüfüng des Vorhandenseins und ein Bandpaß (6) zur Prüfung der Frequenztoleranz des Signals dient.

5. Gasbeheiztes Gerät nach Anspruch 1,
dadurch gekennzeichnet,
daß die eigensichere Schaltung (7) der Verstärkung und Gleichrichtung des Signals dient und an ihrem Ausgang das Sicherheitsrelais (8) angeschlossen ist.

6. Gasbeheiztes Gerät nach Anspruch 2,
dadurch gekennzeichnet,
daß das Meßorgan (14) ein ohm'scher Widerstand ist, an dem das Vorhandensein eines Spannungsabfalls festgestellt wird.

7. Gasbeheiztes Gerät nach Anspruch 1,
dadurch gekennzeichnet,
daß mehrere Glaskeramik-Kochfelder vorgesehen sind.

## Claims

1. A gas-heated appliance, in particular a cooker, with at least one glass ceramic cooking zone, with a radiant gas burner in a gas supply installation and with an electronic control device for operating the appliance, this device having two independent safety paths for monitoring safety-sensitive consumers, in the case of which, using digital signals, one safety path (5) monitors the electronic control in respect of each consumer (12) and the other safety path (11) monitors the flow of current through this consumer (12),
characterized in that
the appliance has a safety relay and a magnetic valve, which is monitored by the latter, in the gas supply installation and in that, in the first safety path (5), a signal of a given frequency, given out by a microprocessor (1) in the control device, is checked for presence and frequency tolerance and failure of a component by an intrinsically safe circuit (7).

2. A gas-heated appliance according to Claim 1,
characterized in that
the second safety path (11) includes the switch (9) of the safety relay (8) - this switch (9) being closed during regular operation -, the consumer (12), a triac (13) for controlling it and also a measuring component (14) for detecting the flow of current through this safety path.

3. A gas-heated appliance according to Claim 1 or 2,
characterized in that
the first safety path (5) is jointly available for all the consumers (12), but the second safety path (11) is separately available for each consumer (12).

4. A gas-heated appliance according to Claim 1,
characterized in that
an AND element (2) serves for checking the presence of the signal and a band-pass filter (6) serves for checking the frequency tolerance of the signal.

5. A gas-heated appliance according to Claim 1,
characterized in that
the intrinsically safe circuit (7) serves for amplifying and rectifying the signal and the safety relay (8) is connected to its output.

6. A gas-heated appliance according to Claim 2,
characterized in that
the measuring component (14) is an ohmic resistor, at which the presence of a drop in voltage is detected.

7. A gas-heated appliance according to Claim 1,
characterized in that
several glass ceramic cooking zones are provided.

## Revendications

1. Appareil chauffé au gaz, en particulier appareil de cuisson comportant au moins une zone de cuisson en vitrocéramique, comportant un brûleur à rayonnement de gaz dans un dispositif d'alimentation en gaz et comportant un dispositif de commande électronique pour le fonctionnement de l'appareil, qui comporte deux voies de sécurité indépendantes l'une de l'autre pour le contrôle de récepteurs fragiles du point de vue de la sécurité, une voie de sécurité (5) contrôlant la commande électronique pour chaque récepteur (12) et l'autre voie de sécurité (11) contrôlant le flux de courant pour ce récepteur (12) par utilisation de signaux numériques, caractérisé en ce que l'appareil comporte un relais de sécurité et une soupape magnétique contrôlée par celui-ci dans le dispositif d'alimentation en gaz et en ce que dans la première voie de sécurité (5) un signal de fréquence donné, délivré par un microprocesseur (1) dans le dispositif de commande, est contrôlé quant à la présence et à la tolérance de fréquence et la défaillance d'un composant est contrôlé par un circuit (7) à sécurité interne.

2. Appareil chauffé au gaz selon la revendication 1, caractérisé en ce que la deuxième voie de sécurité (11) contient l'interrupteur (9) du relais de sécurité (8) fermé en cas de fonctionnement correct, le récepteur (12), un triac (13) pour sa commande ainsi qu'un organe de mesure (14) pour le constat du flux de courant par sa voie de sécurité.

3. Appareil chauffé au gaz selon la revendication 1 ou 2, caractérisé en ce que la première voie de sécurité (5) est commune à tous les récepteurs (12), tandis que la deuxième voie de sécurité (11) est prévue séparément pour chaque récepteur (12).

4. Appareil chauffé au gaz selon la revendication 1, caractérisé en ce qu'un élément ET (2) sert à la vérification de la présence du signal et un passe-bande (6) sert à la vérification de la tolérance de fréquence du signal.

5. Appareil chauffé au gaz selon la revendication 1, caractérisé en ce que le circuit (7) à sécurité interne sert à l'amplification et au redressement du signal et le relais de sécurité (8) est raccordé à sa sortie.

6. Appareil chauffé au gaz selon la revendication 2, caractérisé en ce que l'organe de mesure (14) est une résistance ohmique, à laquelle est constatée la présence d'une chute de tension.

7. Appareil chauffé au gaz selon la revendication 1, caractérisé en ce que plusieurs zones de cuisson en vitrocéramique sont prévues.
